Europäisches Patentamt

European Patent Office

Office européen des brevets

(19)

(11) EP 1 462 761 A1

(12) DEMANDE DE BREVET EUROPEEN

(43) Date de publication:
29.09.2004 Bulletin 2004/40

(51) Int Cl.⁷: G01C 5/00, G05D 1/06, G01S 5/14, G01C 21/00

(21) Numéro de dépôt: 04101083.6

(22) Date de dépôt: 17.03.2004

(84) Etats contractants désignés:
AT BE BG CH CY CZ DE DK EE ES FI FR GB GR
HU IE IT LI LU MC NL PL PT RO SE SI SK TR
Etats d'extension désignés:
AL LT LV MK

(30) Priorité: 25.03.2003 FR 0303646

(71) Demandeur: Thales
92526 Neuilly Sur Seine (FR)

(72) Inventeurs:
• GUILLARD, Patrice
94117, ARCUEIL (FR)
• LACONDEMINE, Xavier
94117, ARCUEIL (FR)
• CHOEUR, Philippe
94117, ARCUEIL (FR)

(74) Mandataire: Nguyen Van Yen, Christian
THALES Intellectual Property
31-33 avenue Aristide Briand
94117 Arcueil Cedex (FR)

(54) Aide à la navigation augmentée en intégrité verticale

(57) La présente invention appartient au domaine des aides à la navigation pour aéronef. Elle est particulièrement avantageuse notamment car elle propose des moyens alternatifs ou complémentaires d'élaboration d'une altitude sécurisée grâce à l'entretien de l'altitude et de l'intervalle de confiance associé par des mesures de pression atmosphérique (complémentairement, de température atmosphérique) ou de traitement de messages ou signaux de navigation par satellites. L'un des objets de l'invention est un dispositif d'aide à la navigation d'un aéronef augmentée en intégrité verticale comprenant un récepteur de signaux et messages de navigation en provenance d'une constellation de satellites. La présente invention comprend en outre des moyens de mémorisation de la mesure de l'altitude et de l'intervalle de confiance associé de l'aéronef et des moyens d'estimation de la variation de cette altitude et de l'intervalle de confiance associé permettant d'adapter l'altitude de vol au niveau de risque statistique accepté de collision avec le relief découlant d'une défaillance non déclarée du système de navigation.

Fig. 2

EP 1 462 761 A1

**Description**

La présente invention appartient au domaine des aides à la navigation pour aéronef. Plus spécifiquement, elle concerne les aides comportant un récepteur de signaux et messages de navigation en provenance d'une constellation de satellites de type GPS (Global Positioning System).

Deux critères majeurs sont utilisés pour qualifier les performances des aides de ce type : la précision et l'intégrité. Le premier critère qualifie l'erreur de position (ou de vitesse) observée en fonctionnement nominal (absence de panne) ; le deuxième critère qualifie le degré de confiance que l'utilisateur peut accorder aux informations de position (ou de vitesse) délivrées par le système de navigation.

Ce second critère peut se traduire par l'expression, pour chaque position ou vitesse calculée, d'un intervalle de confiance fonction de l'occurrence du risque accepté par l'utilisateur que la position (ou la vitesse) réelle puisse être en dehors de cet intervalle du fait d'une défaillance non détectée du système de navigation.

Les exigences de performance de précision et d'intégrité de la navigation verticale sont particulièrement critiques lorsque l'aéronef vole à basse altitude en présence de relief accidenté. Les systèmes actuels de navigation par satellites ne suffisent pas à satisfaire ce niveau d'exigence sans traitement complémentaire ni aide extérieure.

La précision verticale est améliorée par le dispositif divulgué par le brevet US 6,216,064, dispositif hybride comprenant un récepteur GPS (Global Positionning Satellite), un baroaltimètre et une radiosonde. Ce dispositif n'apporte cependant pas de solution aux indisponibilités ponctuelles ou aux pertes de continuité de l'intégrité liées à l'insuffisante redondance des mesures du fait de l'écart-type du bruit de mesure, du faible nombre et de la configuration géométrique défavorable des satellites en visibilité.

La présente invention résoud ce problème de disponibilité et de continuité de l'intégrité en mettant en oeuvre des moyens de mesure d'une altitude absolue, dont un récepteur GPS, des moyens de mémorisation de cette altitude lorsqu'elle est précise et intègre ainsi que des moyens de propagation de l'altitude et de la distance de protection associée basés sur l'estimation de la variation d'altitude depuis l'instant de mémorisation à l'aide de senseurs continus.

A cet effet, la présente invention divulgue un dispositif d'aide à la navigation d'un aéronef de type comprenant un récepteur de signaux et messages de navigation en provenance d'une constellation de satellites, des moyens de mémorisation de la mesure de l'altitude de l'aéronef et des moyens d'estimation de la variation de ladite altitude, caractérisé en ce que le récepteur et les moyens coopèrent en fournissant une information d'altitude absolue et un intervalle de confiance associé (DPV).

La présente invention est particulièrement avantageuse notamment car elle propose des moyens alternatifs ou complémentaires de propagation de l'altitude calibrée : il peut s'agir soit de mesures de pression atmosphérique (complémentairement de température atmosphérique) ou de traitement des messages ou signaux de navigation sur le récepteur GPS.

L'invention sera mieux comprise au vu des figures annexées et des commentaires qui les illustrent dans la suite de la description.

Figure 1 : Allocation des budgets d'erreur conduisant à l'élaboration des consignes de guidage d'un aéronef.
Figure 2 : Schéma de principe du dispositif selon l'invention.
Figure 3 : Calcul de DPV hybride par la méthode de séparation maximum.
Figure 4 : Hybridation en précision ou en intégrité.
Figure 5 : Propagation de la distance de protection verticale par le mode GPS relatif autonome.
Figure 6 : Propagation de la distance de protection verticale par le baroaltimètre calibré et aidé en température.

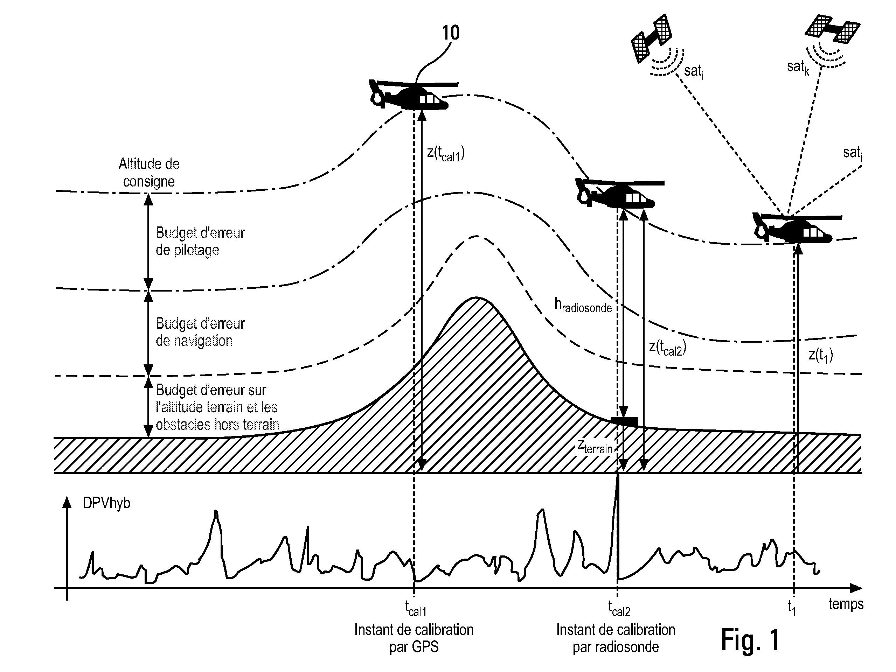

La Figure 1 explicite l'allocation de budgets d'erreur conduisant à l'élaboration des consignes de guidage d'un aéronef dans le cadre d'une mission à basse altitude. Comme l'illustre cette figure, le dispositif divulgué dans le cadre de la présente invention profite des instants auxquels la navigation par satellites offre une faible distance de protection verticale (tcal1) ou des instants de passage au-dessus d'un point caractéristique (tcal2) pour calibrer l'altitude hybride et la propager avec une faible divergence.

Les performances du système de navigation permettent dans ces conditions de diminuer le budget d'erreur de navigation donc de voler au plus près du relief sans transiger sur la sécurité.

La localisation GPS offre des performances de précision remarquables mais son intégrité n'est pas garantie au delà d'un risque de $10^{-4}$/h correspondant à l'occurrence du risque de défaillance de constellation non signalée par le message de navigation.

Classiquement, l'intégrité de la localisation GPS est assurée de façon autonome à l'aide d'un dispositif RAIM (Receiver Autonomous Integrity Monitoring) qui exploite la redondance des mesures pour estimer l'intervalle de confiance (distance ou rayon de protection) associé à la position en fonction du niveau de risque à couvrir.

On décrit ici brièvement un algorithme de contrôle d'intégrité RAIM appliqué à la navigation verticale. Le même raisonnement s'applique pour la sécurisation de la navigation horizontale.

Supposons disposer de n mesures GPS (n satellites visibles), il est alors possible de former n solutions verticales GPS à (n-1) mesures.

La solution la plus vraisemblable et la plus précise entre toutes, en l'absence de panne de mesure est la solution à n mesures GPS . Cette solution constitue l'altitude GPS.

La distance de protection verticale en l'absence de panne $DPV_{H0}$, définie au niveau de confiance (1-$P_r$) est égale à :

$$DPV_{H0} = Erf^{-1}(P_r).\sigma_{mesure}.VDOP \text{ , soit } DPV_{H0} = 5,6.\sigma_{mesure}.VDOP$$

pour $P_r$ = 10$^{-7}$/h ($P_r$ étant le niveau de risque accepté que l'erreur verticale soit supérieure à la distance de protection verticale) ;

✓ erf$^{-1}$ est la fonction inverse de erf. avec

$$erf(x) = \frac{2}{\sqrt{2\Pi}} \int_x^{+\infty} e^{-\frac{1x^2}{2}} dx$$

(les erreurs étant supposées gaussiennes)

✓ σ mesure représente l'écart-type de la mesure.

✓ VDOP (Vertical Dilution of Precision) est le coefficient de dilution verticale lié à la configuration géométrique des satellites utilisés dans la solution à n satellites.

La distance de protection verticale en présence d'une panne unique de mesure sera définie par le maximum de la distance de séparation $|Z_{GPS} - Z_{GPSi}|$ (les $Z_{GPSi}$ représentant les n solutions à (n-1) mesures) augmentée de l'intervalle de confiance au niveau (1-$P_{md}$) des solutions $Z_{GPSi}$, soit :

$$DPV_{H1} = \underset{i=1}{\overset{n}{Max}} \left\{ |z_{GPS} - z_{GPSi}| + Erf^{-1}(P_{md}).\sigma_{mesure}.VDOP_i \right\}$$

(Erf$^{-1}$($P_{md}$) ≈ 3 pour $P_{md}$ = 10$^{-3}$

L'altitude $Z_{GPS}$ est donc finalement donnée avec une distance de protection verticale

$$DPV = Max\{DPV_{H0}, DPV_{H1}\}.$$

Il apparaît que les distances de protection élaborées par le RAIM « snapshot » (i.e. n'utilisant que les mesures de l'instant courant) sont sujettes à d'importantes fluctuations à la fois dues au bruit de la mesure et à la géométrie des satellites. L'obtention de faibles distances de protection nécessite non seulement que le coefficient de dilution verticale VDOP de la solution à n mesures soit faible et que les VDOP, des solutions à (n-1) mesures le soient également-ment. Les variations naturelles de la géométrie des satellites, la perte d'un satellite consécutive à un masquage peuvent donc conduire à une augmentation brutale des distances de protection. Il en résulte des performances souvent insuffisantes en termes de disponibilité et de continuité de l'intégrité.

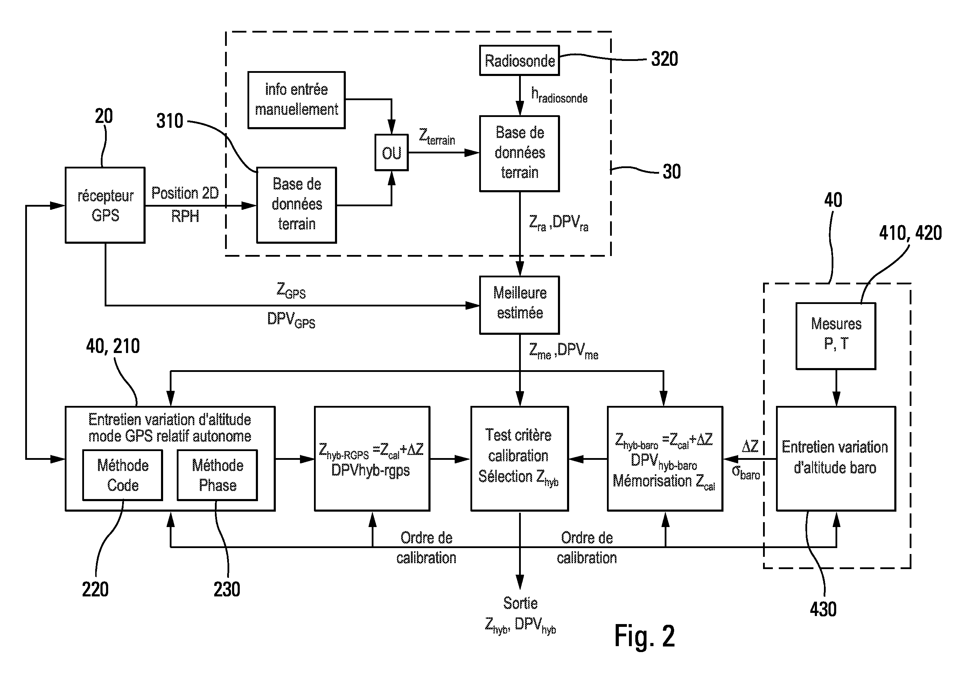

La Figure 2 donne le schéma de principe de l'invention.

L'altitude hybride est calibrée lorsque le critère de calibration est satisfait par la meilleure estimée de l'altitude fournie par des moyens aptes à donner une altitude absolue tels qu'un récepteur GPS, un couplage de la position 2D GPS à une base de donnée terrain et à une radiosonde, ou plus simplement une mesure radiosonde au moment de passage au-dessus d'un point caractéristique repéré en phase de préparation de mission, ou enfin par une information entrée manuellement par le pilote.

Entre les opérations de calibration le dispositif 40 fournit une estimée de la variation d'altitude ΔZ depuis la dernière calibration. Plusieurs variantes de réalisation du dispositif 40 sont présentées dans la suite de la description.

Un premier groupe de variantes repose sur un calcul de ΔZ dans un module 430 d'intégration des données issues de capteurs de pression 410 et, le cas échéant de capteurs de température 420.

Un deuxième groupe de variantes repose sur un calcul de ΔZ dans un module 210 de calcul de la position/ vitesse du satellite soit par corrélation des codes GPS reçus sur plusieurs canaux satellites du récepteur soit par analyse Doppler de la phase du signal reçu, soit par une combinaison des deux techniques.

Ces deux groupes de variantes peuvent être combinés entre eux.

Dans la suite de la description on s'intéresse d'abord au premier groupe de variantes puis au deuxième. Les modalités de calcul de DPV propres à chaque variante sont décrites au fil de l'exposé.

### Variantes 410, 420, 430

Le baroaltimètre est un capteur de pression classiquement utilisé en aviation civile pour la détermination de « l'altitude pression » qui constitue une référence commune pour l'ensemble des aéronefs. Cette altitude pression permet de définir des niveaux de vol mais elle ne correspond pas à une information d'altitude géométrique réelle. Elle ne peut donc pas être utilisée directement à des fins d'évitement d'obstacle. Pour répondre à ce besoin, l'altitude barométrique est généralement corrigée grâce à des mesures de pression sol ramenées au niveau de la mer en supposant des conditions standard de température, mais même dans ce cas, des marges considérables doivent être prises pour assurer la sécurité en approche de non précision.

On propose ici de tirer partie des qualités de continuité, d'autonomie du baroaltimètre pour entretenir une information d'altitude absolue, après calibration par le GPS ou par toute autre source de verticale absolue précise (l'intégrité de la calibration étant monitorée par le contrôle multisenseur).

### - Principe d'utilisation du baroaltimètre

Supposons qu'à l'instant $t_1$, on dispose d'une altitude suffisamment précise et intègre.

Cette altitude et la pression $P_1$ (ainsi qu'éventuellement la température $T_1$) mesurée au même instant sont alors mémorisées.

A l'instant $t_2$, on mesure une pression $P_2$ (et éventuellement une température $T_2$), il est possible de déterminer la variation d'altitude $\Delta z = z_2 - z_1$ effectuée depuis l'instant $t_1$ en intégrant l'équation de Laplace entre ces deux points :

$$\int_{P_1}^{P_2} \frac{dP}{P} = \int_{z_1}^{z_2} \frac{-g(z)}{R_{air}.T(z)} dz$$

$g(z)$ étant l'accélération de la pesanteur $g(z) \approx g_0 = 9{,}80655 \ m.s^{-2}$

$T(z)$ étant la loi de variation de la température en fonction de l'altitude $z$

$$R_{air} = \frac{R}{M} = 287{,}0528742,$$

L'altitude absolue de l'aéronef à l'instant $t_2$ est alors donnée par :

$$z_2 = z_1 + \Delta z$$

La précision de l'altitude ainsi déterminée est fonction des hypothèses et de la méthode d'intégration de l'équation de Laplace.

### - Hauteur de la colonne d'air en l'absence de mesure de température

En l'absence de mesures de température, la variation d'altitude entre deux points de mesures est déterminée en supposant la loi de température standard.

L'intégration de l'équation de Laplace entre deux points pour lesquels on dispose des mesures de pression $P_{1\_mesure}$ et $P_{2\_mesure}$ conduit alors à la relation :

$$\Delta z_{i\_mc} = -\frac{T_{1\_std}}{a_{std}}\left(1-\left(\frac{P_{2\_mesure}}{P_{1\_mesure}}\right)^{\frac{-a_{std}\,R_{air}}{g}}\right)$$

avec :

$T_{1\_std}$ : la température standard à l'altitude $z_1$ : $T(z_1) = T_{ref\_std} + a_{std}\,z$ ($T_{ref\_std}$ = 288,15$K$)

$a_{std}$ = -6,5°$c/km$ : le gradient de température standard (-6,5°c/1000m)

$R_{air} = \frac{R}{M}$ = 287,0528742

$g_0$ = 9,80655 $m.s^{-2}$

Dans ces conditions, la précision de la verticale barométrique peut être caractérisée par la variance $\sigma_b^2$ :

$$\sigma_b^2 = \sigma_{cal\_GPS}^2 + \sigma_t^2 + \sigma_H^2 + \sigma_V^2$$

avec :

$\sigma_{cal\_GPS}^2$ , variance de l'erreur de calibration initiale : $\sigma_{V\_GPS}^2 = \sigma_m^2.VDOP^2$

$\sigma_t^2 = K_t^2\,\Delta t^2$ , $K_t$ étant le coefficient de divergence temporel = 15m/h

$\sigma_H^2 = K_H^2.\Delta d^2$, $K_h$ étant le coefficient de divergence horizontal = 0,5 m /Nm

$\sigma_v^2 = K_v^2.\Delta^2$ , $K_v$ étant le coefficient de divergence vertical = 32.10$^{-3}$ m/ft en dessous de 6000 ft.

Les coefficients de divergence $K_t$, $K_H$ et $K_v$ permettent de traduire la dispersion de la mesure en fonction de l'éloignement spatial et temporel du point de calibration, les conditions météorologiques réelles pouvant être très éloignées des conditions standards (température au sol et gradient de température non standards. Ces coefficients ont été définis par le passé dans le cadre de l'augmentation RAIM baro Norme RTCA - DO229A, Appendix G - Requirements for altimeter aiding.

Le coefficient de divergence vertical $K_v$ est particulièrement pénalisant dès que l'aéronef change de niveau ; cela résulte de la grande variabilité de la répartition de la température au voisinage du sol. Il n'est en effet pas rare de rencontrer dans les basses couches de l'atmosphère des phénomènes d'inversion du gradient de température liés à un refroidissement plus rapide du sol que de l'air. Ces phénomènes d'inversion du gradient de température sont plus fréquents la nuit et en hiver (Météorologie générale J-P TRIPLET et G. ROCHE, 3ème édition - 1986, Météo France). Une détermination plus précise de la variation d'altitude basée sur les mesures de pression est possible dans le cas où l'on dispose d'une sonde de température à bord de l'aéronef.

- Détermination de la hauteur de la colonne d'air dans le cas où l'on dispose de mesures de température

Dans le cas où l'on dispose de mesures de température, on propose de calculer la variation d'altitude entre deux points de mesures avec une précision accrue en intégrant l'équation de Laplace sur des tronçons de faible épaisseur (50 à 100 m) de sorte que la loi de température puisse être considérée comme linéaire localement.

Sur un tronçon, l'intégration de l'équation de Laplace conduit à la relation :

$$\Delta z_{i\_c} = -(T_{2\_mesure} - T_{1\_mesure})\frac{\ln\left(\dfrac{P_{2\_mesure}}{P_{1\_mesure}}\right)}{\ln\left(\dfrac{T_{2\_mesure}}{T_{1\_mesure}}\right)}\frac{R_{air}}{g}$$

ce qui peut être approché par :

$$\Delta z_{i\_c} \approx \frac{-R}{g} \frac{\left(T_{1\_mesure} + T_{2\_mesure}\right)}{2} . \ln\left(\frac{P_{2\_mesure}}{P_{1\_mesure}}\right)$$

et finalement :

$$\Delta z_{i\_c} \approx \frac{-R}{g}\left(T_{1\_mesure} + T_{2\_mesure}\right)\left(\frac{P_{2\_mesure} - P_{1\_mesure}}{P_{1\_mesure} + P_{2\_mesure}}\right)$$

Cette dernière expression est une formule approchée consistant à considérer la température constante sur la tranche considérée et égale à la température moyenne. Cette approximation n'induit qu'une dégradation mineure de la précision par rapport à l'expression faisant intervenir les logarithmes (seulement 3 m pour 1000 m de variation de hauteur).

A chaque nouvelle mesure de pression P et de température T, l'altitude est calculée selon l'algorithme suivant :

Si critère de recalage baro satisfait,

$Z_1 = Z_{calibration}$
$Z_2 = Z_{calibration}$
$P_{1\_mesure} = P$
$T_{1\_mesure} = T$
$T_{1\_std} = T_{0\_std} - a_{std}.z_1$ (avec $T_{0\_std} = 288,15K$ et $a_{std} = -6,5°c /1000 m$)
$\Delta z = 0$
sinon
$P_{2\_mesure} = P$
$T_{2\_mesure} = T$

$$\Delta z_{i\_c} \approx \frac{-R}{g}\left(T_{1\_mesure} + T_{2\_mesure}\right)\left(\frac{P_{2\_mesure} - P_{1\_mesure}}{P_{1\_mesure} + P_{2\_mesure}}\right)$$

si $\Delta z_c > seuil$,

$z_1 = z_1 + \Delta z_c$
$T_{1\_mesure} = T_{2\_mesure}$
$T_{1\_std} = T_{2\_std}$
$\Delta z_c = 0$
finsi
$z_2 = z_1 + \Delta z_c$

Cette méthode permet d'entretenir toute information de verticale qu'elle soit issue du GPS ou d'un autre senseur.

En particulier, le baroaltimètre peut avantageusement être calibré par la radiosonde lorsque la mesure est possible (connaissance de l'altitude terrain) ou par une altitude rentrée par l'utilisateur pour délivrer ensuite une verticale totalement indépendante du GPS.

La calibration du baroaltimètre à partir de la radiosonde n'est possible que si l'altitude du terrain survolé à cet instant est connue :

Les points de calibration peuvent être prévus lors d'une préparation de mission : au passage à la verticale de quelques points caractéristiques dont l'altitude est connue avec précision, la verticale barométrique peut alors être recalée de façon transparente pour le pilote.

Dans le cas où l'on dispose d'une base de données terrain, l'utilisation conjointe de la navigation horizontale GPS et des mesures radiosonde permet d'obtenir une source permanente de localisation verticale.

Le recalage du baroaltimètre par la radiosonde nécessite que la navigation horizontale soit suffisamment intègre, en particulier au dessus d'un relief accidenté (une faible erreur de position 2D pouvant alors induire une forte erreur d'altitude). L'amélioration des performances de la navigation horizontale GPS obtenue grâce à la méthode proposée par les variantes 219, 220, 230 peut s'avérer nécessaire.

- Précision de l'altitude baro calibré avec compensation en température

Dans la mesure où l'intégration est réalisée en considérant des variations d'altitude suffisamment faibles pour que la loi de température puisse être localement assimilée à une droite, la précision de l'altitude résultante ne dépend que de la précision des mesures de pression et de température.

Avec des capteurs standard (erreur de 1 hPa sur la pression et 1°c sur la température), cette méthode de compensation en température permet ainsi d'obtenir un coefficient de divergence vertical K'v 20 à 30 fois plus petit que le coefficient standard Kv sans compensation en température.

La précision de la verticale barométrique calibrée par le GPS et compensée en température est caractérisée par la variance $\sigma'^2_b$ :

$$\sigma'^2_b = \sigma^2_{calibration} + \sigma^2_t + \sigma^2_H + \sigma'^2_V$$

avec :

$\sigma^2_{calibration}$, variance de l'erreur de calibration initiale : $\sigma^2_{calibration} = \sigma^2_m . VDOP^2$ dans le cas de la calibration par le GPS (en l'absence de panne)

$\sigma^2_t = K^2_t \, \Delta t^2$ , $K_t$ étant le coefficient de divergence temporel = 15m/h

. $\sigma^2_H = K^2_H \, . \Delta d^2$ , $K_h$ étant le coefficient de divergence horizontal = 0,5 m /Nm

. $\sigma'^2_v = K'^2_v \, . \Delta^2$ , $K'_v$ étant le coefficient de divergence vertical = $1,5.10^{-3}$ m/ft pour une altitude en dessous de 6000 ft

**- Altitude résultante**

L'altitude utilisée pour la navigation est choisie en fonction des besoins de l'application en termes de précision, de guidabilité, ou d'intégrité.

Il peut s'agir :

De l'altitude GPS
celle-ci ayant l'avantage de procurer un guidage confortable car exempt de sauts brutaux.
De l'altitude baro
celle-ci ayant l'avantage d'être continue (insensible au brouillage, interférences...) mais présentant l'inconvénient de subir des échelons aux instants de recalage du baro.
Ou encore d'une combinaison linéaire de l'altitude GPS et de l'altitude baro optimisée sur critère de :

- Précision (cas de la moyenne pondéré de l'altitude GPS et de l'altitude baro)
- Intégrité (obtenue par exemple avec des coefficients choisis de façon à minimiser la distance de protection verticale)

**- Sécurisation de la navigation**

Le baroaltimètre compensé en température permet l'entretien d'une information d'altitude précise. Il constitue un senseur de verticale supplémentaire permettant la mise en place d'un contrôle multisenseur couvrant non seulement les risques de défaillance satellite mais également les risques de panne matérielle.

Deux méthodes de sécurisation de la navigation sont proposées :

La première méthode de sécurisation proposée repose sur une adaptation de l'algorithme RAIM de distance de séparation maximum en ce qu'elle intègre dans l'algorithme RAIM les altitudes hybrides correspondant aux solutions à (n-1) satellites entretenues par le baroaltimètre compensé en température et l'altitude GPS courante pour sécuriser l'altitude hybride calibrée par la solution à n satellites.

La seconde méthode, dérivée de la première, présente l'avantage de pouvoir être implémentée en utilisant les informations délivrées classiquement par un récepteur GPS intégrant un RAIM car elle ne nécessite pas les résultats des différentes solutions à n-1 senseurs.

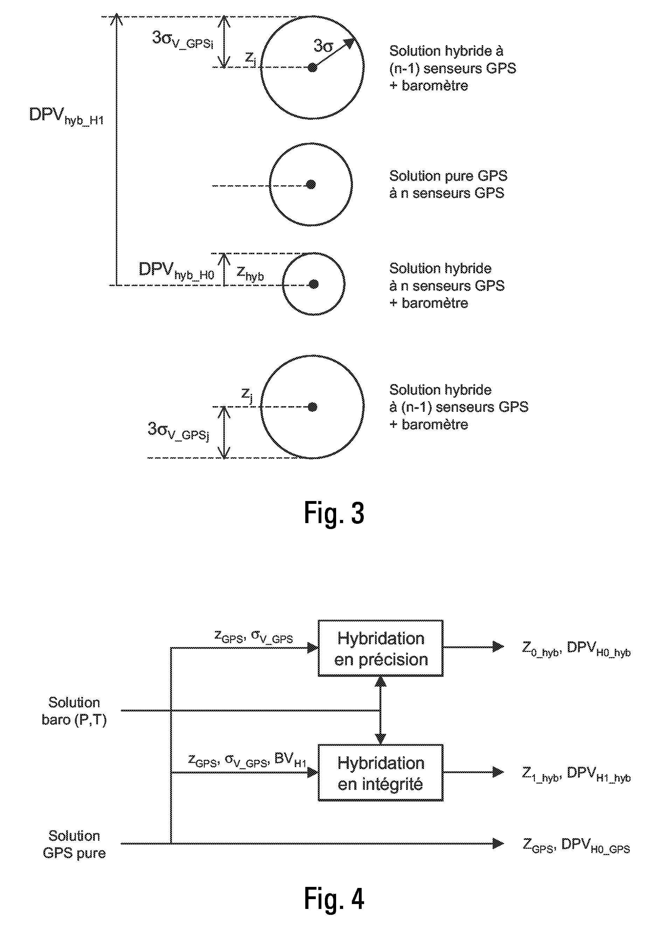

- Méthode RAIM de la distance de séparation maximum (Figure 3)

Cette méthode réalise l'intégrité de la navigation en considérant les mesures GPS et l'altitude baro comme des mesures issues de capteurs indépendants.

Supposons disposer de n senseurs GPS indépendants (n mesures de distance porteur satellites) et d'un senseur barométrique.

Il est alors possible de former n solutions de localisation GPS à (n-1) senseurs GPS, la précision de chaque solution d'indice i étant alors définie par les VDOP, ; chaque solution à (n-1) senseurs GPS est hybridée avec le baromètre pour donner n solutions hybrides à (n-1 ) senseurs GPS et un senseur barométrique.

Il est possible de disposer également de deux autres solutions, la solution GPS pure à n senseurs et la solution hybride à n+1 senseurs c'est-à-dire n senseurs GPS et le senseur barométrique.

Les solutions hybrides GPS-baro sont réalisées selon un critère de précision, le baromètre est calibré par l'altitude GPS lorsque la précision verticale du GPS est meilleure que la précision verticale hybride correspondante.

La solution la plus vraisemblable et la plus précise entre toutes, en l'absence de panne d'un des senseurs GPS ou du senseur barométrique est la solution hybride à n+1 senseurs ; cette solution constitue la solution d'altitude optimale utilisable pour la navigation.

L'incertitude de cette solution est définie par une variance d'erreur égale à :

$$\sigma^2_{hyb} = \sigma^2_{cal\_GPS} + \sigma^2_{baro}$$

où $\sigma^2_{cal\_GPS}$ représente la variance d'erreur du GPS au moment de la calibration et ($\sigma^2_{baro}$ la variance d'erreur résultant de la divergence spatiale et temporelle de l'altitude barométrique.

La distance de protection verticale en l'absence de panne $DPV_{hyb\_H0}$ , définie au niveau de confiance $(1-P_r)$ est égale à :

$$DPV_{hyb\_H0} = \text{Erf}^{-1}(P_r).\sigma_{hyb}, \text{ soit } DPV_{hyb\_H0} = 5{,}6.\sigma_{hyb}$$

pour $P_r = 10^{-7}/h$.

La distance de protection verticale en présence d'une panne unique (d'un des n satellites ou du baroaltimètre) est définie par le maximum de la distance de séparation $|z_{hyb} - z_i|$ (les $z_i$ représentent les n+1 solutions à n senseurs c'est-à-dire les n solution à (n-1) senseurs GPS hybridées au baroaltimètre et la solution GPS pure à n senseurs GPS) augmentée de l'intervalle de confiance au niveau $(1-P_{md})$ des solutions $z_i$, soit :

$$DPV_{hyb\_H1} = \underset{i=1}{\overset{n+1}{Max}} \left\{ |z_{hyb} - z_i| + \text{Erf}^{-1}(P_{md}).\sigma_{V-GPSi} \right\}$$

$(\text{Erf}^{-1}(P_{md}) \approx 3 \text{ pour } P_{md} = 10^{-3}$

avec $\sigma_{V-GPSi} = \sqrt{\sigma_{V-GPSi\,cal^2} + \sigma^2 baro}$

pour $i \in [\![1; n]\!]$ ⟵ écart-type d'erreur verticale des n solutions GPS pure à (n-1) satellites à l'instant de calibration

$\sigma_{V-GPSi}$ = écart-type d'erreur verticale de la solution GPS pure à l'instant courant

pour i=n+1

Cette méthode de distance de séparation maximum est rigoureuse dans la mesure où les hypothèses sont respectées (panne unique, représentativité des variances d'erreur) ; elle délivre les rayons de protection qui permettent de couvrir les défaillances avec le niveau de sécurité spécifié.

Les distances de protection obtenues $DPV_{hyb\_H0}$ et $DPV_{hyb\_H1}$ ne sont pas minimales car la solution hybride à n senseurs GPS est presque toujours décentrée par rapport aux solutions extrêmes à (n-1) senseurs GPS. Cette solution étant la plus probable est néanmoins retenue pour la navigation (moins de bruit). L'intervalle de confiance autour de cette solution est généralement symétrisé (sauf si on ne s'intéresse qu'au risque vers le bas) ce qui conduit à une augmentation du domaine de protection (donc à une diminution de la disponibilité). D'autres choix peuvent procurer une meilleure optimisation au sens de l'intégrité (distances de protection $DP_{H0}$ et $DP_{H1}$ minimales) au détriment de la précision.

- Méthodes du rayon de protection selon les résidus aux moindres carrés

La méthode précédente nécessite les résultats de localisation à n-1 senseurs GPS (aux instants de calibration).

Dans le cas où l'on ne dispose pas de ces résultats, on peut envisager une méthode d'augmentation barométrique n'utilisant que les informations disponibles en sortie du récepteur GPS, mais basée sur un principe équivalent à celui de la méthode des distances de séparation maximum.

Cette méthode réalise l'intégrité de la verticale en deux étapes :

Etape 1 : Détermination d'une distance de protection baro couvrant le risque de panne satellite au moment de la calibration du baro par le GPS

Etape 2 : Détermination d'une distance de protection couvrant le risque de panne baro grâce à la surveillance du baro par le GPS.

Sous l'hypothèse d'une panne satellite au moment de la calibration, la distance de protection $DPV_{H1}$ obtenue par la méthode des résidus aux moindres carrés correspond à l'expression :

$$DPV_{H1} = Vslope_{max} \cdot \left[ \|p\| + \frac{Pbiais - T_D}{2} \right] + K_{H1} \cdot \sigma_{V\_GPS}$$

Cette distance de protection est composée de deux termes :

un terme $BV_{H1}$ correspondant à la projection du biais de mesure $\|p\| + \frac{Pbiais - T_D}{2}$ selon l'axe vertical par le coefficient de projection $Vslope_{max}$ avec :

$\|p\|$ = racine carrée de la somme des carrées des résidus pondérés de la solution (ou module du vecteur parité). Pbiais est l'intervalle de confiance à $(1-P_{md})$ du biais de mesure ; il correspond au plus petit biais détectable ($P_{md}$ =10-3 en général).
$T_d$ = seuil de fausse alarme (défini pour une $P_{fa}$ de 10-4 à 10-5 en général).

Un terme $K_{H1} \cdot \sigma_{V\_GPS}$ représentant le domaine de confiance au niveau à $(1-P_{md})$ de l'erreur de la solution verticale, le coefficient $K_{H1}$ étant le coefficient de probabilité de détection manquée($K \approx 3$ pour $P_{md}$ =10-3).

On peut donc considérer qu'en présence d'une panne GPS, la calibration du baromètre sera entachée d'un biais initial $\leq BV_{H1}$ au niveau de confiance $(1-P_{md})$ et d'une erreur initiale de bruit d'écart-type $\sigma_{V\_GPS} = \sigma_{mesure} \cdot VDOP$; après calibration l'intervalle de confiance à $(1-P_{md})$ de l'altitude hybride sera donné par :

$$DPV_{hyb\_H1} = BV_{H1\_cal} + Erf^{-1}(P_{md}) \cdot \sqrt{\sigma_{cal\_GSP}^2 + \sigma_t^2 + \sigma_H^2 + \sigma_V^2}$$

L'intervalle de confiance de l'altitude hybride correspond à l'intervalle de confiance initial augmenté de l'incertitude barométrique, fonction du temps et de l'éloignement horizontal et vertical de l'aéronef par rapport au point de calibration.

La solution hybride GPS-baro est protégée contre les pannes GPS grâce à la distance de protection $DPV_{hyb\_H1}$, mais elle n'est pas protégée de la panne du senseur barométrique (ou d'une anomalie exceptionnelle météorologique).

La solution GPS pure étant indépendante du baromètre, son écart avec la solution hybride permettra de couvrir les risques de panne de la mesure barométrique.

Le choix de l'altitude utilisée pour la navigation dépend des contraintes de l'application.

Le système peut produire simultanément deux altitudes hybrides :

- $z_{0hyb}$ optimisée pour la précision
- $z_{1hyb}$ optimisée pour l'intégrité

$Z_0hyb$ est calibrée sur critère de précision, c'est-à-dire $DPV_{Ho} < DPV_{hyb\phi\ H\phi}$
$Z_1hyb$ est calibrée sur critère d'intégrité, c'est-à-dire $DPVH1 < DPV_{hyb1H1}$

La meilleure solution au sens de la précision est la solution hybride GPS-baro (notée $Z_{0hyb}$ à la Figure 4) recalée lorsque la précision du GPS est meilleure que celle du baromètre, c'est-à-dire lorsque $DPV_{H0\_GPS} < DPV_{H0\_hyb}$ (cette condition étant différente de la condition $DPV_{H1\_GPS} < DPV_{H1\_hyb}$).

Si l'on retient $z_{0hyb}$ comme la solution utilisable pour la navigation, la distance de protection de $z_{0hyb}$ sera:

$$Max\{DPV_{hyb\_H0}, DPV_{hyb\_H1}, |z_{ohyb}-z_{GPS}| + Erf^{-1}(P_{md}).\sigma_{V\_GPS}\}$$

avec :

-

$$DPV_{hyb\_H0} = Erf^{-1}(P_r).\sqrt{\sigma_{cal\_GPS}^2 + \sigma_t^2 + \sigma_H^2 + \sigma_V^2}$$

-

$$DPV_{hyb\_H1} = BV_{H1\_cal} + Erf^{-1}(P_{md}).\sqrt{\sigma_{cal\_GPS}^2 + \sigma_t^2 + \sigma_H^2 + \sigma_V^2}$$

Il paraît néanmoins plus judicieux de recaler le baroaltimètre sur un critère d'intégrité afin de minimiser la distance de protection $DPV_{hyb\_H1}$.

Dans ce cas, on peut choisir comme solution de localisation utilisable pour la navigation :

*la solution GPS pure ; sa distance de protection sera alors :*

$$Max\{Erf^{-1}(P_r).\sigma_{V\_GPS}, |z_{1hyb} - z_{GPS}| + DPV_{hyb\_H1}, |z_{1hyb}-z_{GPS}| + DPV_{hyb\_H\phi}\}$$

*la solution hybride (altitude baro recalée par le GPS sur critère d'intégrité) ;* sa *distance de protection sera alors* :
$Max\{DPV_{hyb\_H0}, DPV_{hyb\_H1}, |z_{1hyb} - z_{GPS}| + Erf^{-1}(P_{md}).\sigma_{V\_GPS}\}$

La première solution utilise uniquement la verticale GPS pour le guidage, la verticale hybride ne servant qu'à l'intégrité ; cette solution n'est pas entachée d'échelons de recalage d'altitude lorsque l'intégrité GPS redevient meilleure que l'intégrité hybride ; elle est plus simple à implémenter et est exempte des bruits du baromètre.

La deuxième solution est en principe meilleure au sens de la précision que la solution GPS pure, dans la mesure où les instants de calibration sur le critère d'intégrité $DPV_{H1\_GPS} < DPV_{H1\_hybride}$ (ou $Max\{DPV_{H0,-GPS}, DPV_{H1-GPS}\} < Max\{DPV_{H0\_hyb}, DPV_{H1\_hyb}\}$) sont le plus souvent confondus avec les instants de recalage sur le critère de précision $DPV_{H0\_GPS} < DPV_{H0\_hybride}$, mais cette solution peut se traduire par une moins bonne pilotabilité (échelons de recalage, bruit du baromètre).

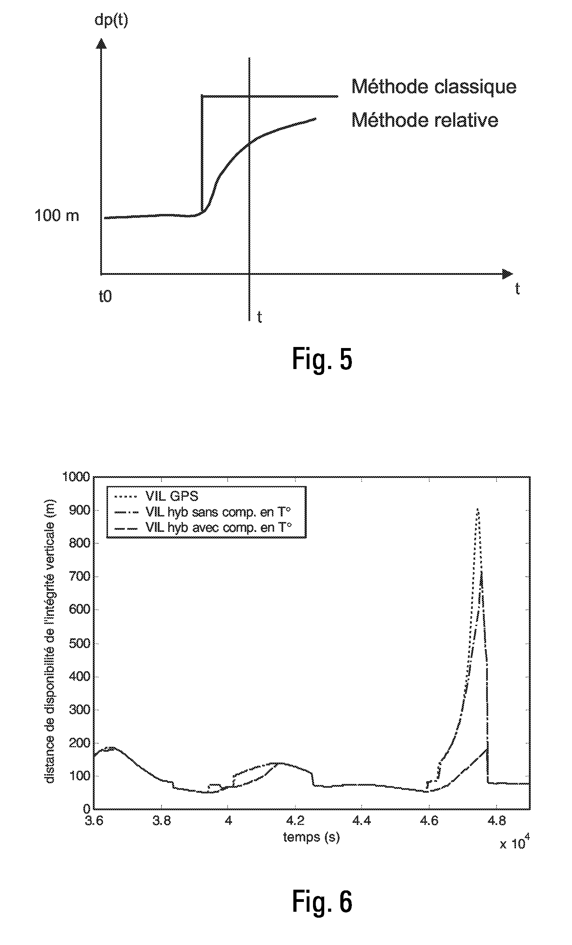

La figure 6 représente la distance de disponibilité de l'intégrité verticale (VIL) en mètres en fonction du temps. Cette simulation selon l'invention correspond à un déplacement d'un aéronef, au-dessus de la ville de TOULOUSE, à une vitesse de 100 Knts selon une pente de 3°. On se base sur la constellation GPS standard telle que définie par la norme RTCA-DO-229. Le RAIM est paramétré à $P_{FA} = 2.10^{-4}$ et $P_{MD} = 10^{-2}$. Pour une solution GPS pure, il apparaît des pics d'indisponibilité pouvant perturber voire retarder ou annuler la navigation. L'hybridation GPS-baroaltimètre sans compensation en température est inefficace compte-tenu de la vitesse élevée de l'aéronef (forte divergence verticale σv). Grâce à la compensation en température, on parvient à garantir une distance de disponibilité de l'intégrité verticale inférieure à 200m, sur 100% du temps. L'avantage d'un tel dispositif est ainsi d'augmenter le nombre ou la durée de créneaux de mission.

**Variantes 210, 220, 230**

On a vu précédemment comment améliorer les performances d'intégrité du GPS en utilisant le baroaltimètre.

Les méthodes proposées ici permettent une amélioration autonome des performances du GPS à la fois vis à vis des localisations verticale et horizontale. Cette amélioration des performances de localisation horizontale bénéficie indirectement à la localisation verticale lorsque le baroaltimètre est recalé à l'aide de la radiosonde.

En outre, les méthodes proposées ici ne nécessitent l'apport d'aucun senseur supplémentaire. Elles reposent sur la mise en oeuvre d'une navigation relative dite autonome, c'est à dire n'utilisant pas de station différentielle.

**- Méthode utilisant le code**

Cette solution consiste à calculer des corrections relatives (ou résidus) à partir d'un point pour lequel on dispose d'une localisation précise et intègre (GPS ou issue d'un autre senseur de navigation) et à appliquer par la suite des corrections aux mesures GPS comme dans le cas de la navigation relative ; dans ce cas cependant, les corrections demeurent constantes pendant le temps de leur utilisation (on suppose le système GPS sans Selective Availability ou la SA retirée en service précis).

La localisation relative par rapport au point de référence arbitraire reste précise pendant la durée de corrélation des erreurs GPS soit environ une demi-heure à une heure en service précis bi-fréquence.

Cette solution est protégée par la distance de protection initiale calculée au point de référence, augmentée de la distance de protection relative estimée régulièrement.

De même que l'erreur estimée, la distance de protection augmente progressivement avec la décorrélation des corrections relatives, mais tant qu'elle reste inférieure à la distance de protection délivrée par le RAIM « snapshot », il y a un gain à utiliser cette méthode. Ce gain résulte de la diminution de l'écart-type des mesures procuré par la correction.

L'augmentation de la distance de protection résulte de deux facteurs :

- L'obsolescence progressive des corrections relatives : En PPS, compte tenu de la durée de corrélation importante des mesures, il sera possible d'utiliser ces corrections relatives pendant 10 à 30 minutes avec un gain intéressant de performances d'intégrité ; pour diminuer l'effet des corrections au fur et à mesure de leur obsolescence, il suffira de les faire tendre vers zéro en faisant croître simultanément l'écart-type de la mesure corrigée de 0 à 6 m pour repasser progressivement à la solution absolue.
- L'incertitude de la position de référence due à la précision de localisation et à une défaillance possible de la constellation : Cette incertitude, exprimée par la distance de protection initiale, entraîne une erreur de localisation relative croissante, les corrections relatives étant constantes et ne traduisant pas l'évolution de la projection du vecteur d'erreur sur la ligne à vue. Cette erreur peut être estimée de façon à corriger en conséquence la distance de protection initiale.

Deux méthodes de réalisation de cette localisation sont envisageables :

- La première méthode utilise le principe de distance de séparation maximum des solutions à (n-1 ) senseurs GPS ; cette solution consiste simplement à appliquer les corrections relatives aux n solutions à (n-1 ) senseurs ainsi qu'à la solution à n senseurs : la solution optimale est la solution à n senseurs protégée par les distances de séparation maximum des n solutions de rang inférieur, augmentée des distances de protection initiales.

  Cette méthode prend en compte simultanément les 2 facteurs de divergence évoqués précédemment mais elle représente une certaine complexité de mise en oeuvre.

- La seconde méthode étant plus facilement réalisable est justifiée de manière plus détaillée ci-après ;

Le gain obtenu par la solution de localisation relative autonome dans le cas d'une variation rapide de la distance de protection est illustré dans l'exemple qui suit.

La distance de protection (notée dp ici) étant proportionnelle l'écart-type de mesure $\sigma_m$ et à un facteur géométrique g susceptible de se dégrader :

$$dp = g.\sigma_m$$

A l'instant $t_0$, on a :

$$dp(t_0) = g(t_0).\sigma_m$$

A $t_1$, on a :

$$dp(t_1) = g(t_1).\sigma_m \text{ avec } dp(t_1) > dp(t_0)$$

Si la solution relative est initialisée à l'instant $t_0$, sa distance de protection $dp_r$ à l'instant t sera :

$dp_r(t)=dp(t_0)+g(t).\sigma'_m(t)$ , $\sigma'_m(t)$ étant l'écart-type de la mesure corrigée

soit :

$$dp_r(t) = dp(t_0) + g(t).\sigma_m . \frac{\sigma'_m(t)}{\sigma_m} = dp(t_0) + dp(t).\frac{\sigma'_m(t)}{\sigma_m}$$

Le gain obtenu peut être illustré par un exemple.

Supposons une variation de la distance de protection de 100 m à 200 m (voir Figure 5).

L'évolution de la correction au bout de 10 minutes étant évaluée à 1 m d'écart-type, on aura :

$$dp_r = 100 + 200.\frac{1}{6} = 133m \ ,$$

soit seulement une augmentation de 33 m (dans le même cas, la divergence barométrique pour une déplacement de 100 KTS aurait été de 100 m).

Le second facteur d'augmentation de la distance de protection doit également être pris en compte ; en effet , en présence d'une défaillance latente de la constellation, on a une erreur de mesure sur l'une des directions à vue $\vec{u}_j$ $(\alpha_j, \beta_j, \gamma_j)$, qui entraîne une erreur de position de référence $\overrightarrow{\Delta P}_0$.

Cette erreur de position entraîne à son tour des erreurs de corrections $\Delta C_i = \overrightarrow{\Delta P}_0 . \vec{u}_{i0}$ qui décalent la position résolue d'un offset identique $\overrightarrow{\Delta P}_0$. La distance de protection initiale exprime l'erreur éventuelle de position, mais les variations de $C_i$ au cours du temps ne sont pas prises en compte, les corrections relatives étant constantes ; il faut donc majorer la distance de protection initiale de l'erreur introduite au cours du temps par l'incertitude de la position de référence.

Les erreurs de correction relative $\varepsilon_{ci}$ s'expriment par :

$$\varepsilon_{Ci} = \overrightarrow{\Delta P}_0 . (\vec{u}_{i0} - \vec{u}_{ih}) = \Delta C_{i0} - \Delta C_{ik}\varepsilon_{ci}$$

Le vecteur d'erreur $\Delta d$ sera évalué au cours du temps par :

$$\Delta d = \Sigma S_i . \varepsilon_{ci} \text{ où } S_i \text{ représente la matrice de projection}$$

Ce vecteur d'erreur permettra de corriger la distance de protection $dp_r$ de la localisation relative exprimée en l'absence d'erreur de position initiale.

$$dp'_r = dp_r + \Delta d$$

Ordre de grandeur de la correction : dans le cas d'un satellite dont le site varie de 360° en 12 h. (30°/h), si $|\Delta P_o| = 200$ m on aura $\Delta d \leq 100$ m au bout d'une heure, soit une dérive de 2,5 m/100 s. ; dans l'exemple précédent, cette dérive ne dégrade que de 15 m la distance de protection de 130 m obtenue au bout de 10 minutes.

L'intérêt de cette technique est d'apporter des améliorations de disponibilité et de continuité de l'intégrité verticale reposant uniquement sur une meilleure utilisation des informations GPS disponibles ; elle n'est pas concurrente de l'augmentation barométrique qui procure des améliorations dans des configurations différentes.

**- Méthode utilisant la phase**

Cette méthode est identique à la précédente dans son principe mais elle utilise le doppler intégré pour propager la solution dans tous les cas où l'on dispose d'une nouvelle solution plus intègre que la précédente, l'avantage par rapport à la méthode précédente étant la réduction de bruit.

Les mesures de pseudo-distances sont initialisées en utilisant la position horizontale résolue (ou introduite manuellement en même temps que l'altitude) et l'altitude précise (hauteur radiosonde + altitude terrain). Elles sont ensuite entretenues par le doppler intégré de manière non divergente, avec un bruit de mesure constant et égal au bruit de phase (typiquement $\approx 1$ cm).

La calibration peut être effectuée :

- Au sol: la position horizontale résolue (ou introduite manuellement en même temps que l'altitude) et l'altitude terrain.
- En vol :

■ avec l'altitude résolue, chaque fois que la distance de protection de l'altitude GPS devient inférieure à la distance de protection de l'altitude entretenue par la phase, de la même façon que pour l'hybridation GPS-baro.
■ Avec la hauteur radiosonde augmentée de l'altitude terrain.

La précision de la hauteur obtenue, relativement à l'altitude de calibration est très bonne tant que la calibration initiale reste valable, c'est-à-dire pendant un horizon de 10 à 15 minutes (on peut admettre une dégradation de la précision de 6 m en 1 h, soit de 1m en 10 minutes) ;

Cette solution a également l'avantage de s'affranchir des erreurs de trajets multiples du site de décollage, la phase étant peu sensible aux trajets multiples ; contrairement au baromètre, elle peut cependant être affectée par des pertes de continuité en présence d'interférences ou de brouillage.

L'entretien réalisé par la mesure de phase s'applique également à la solution horizontale. Cette solution permet, dans certains cas, un "lissage" plus efficace des variations de la distance de protection que le baromètre et un gain substantiel de disponibilité (ou une diminution plus importante du VAL (Vertical Alert Limit).

Les radiosondes et capteurs de pression et de température peuvent être du type classique qualifié pour l'aéronautique. Le calculateur de données de terrain, les traitements des capteurs et les calculs de position/vitesse de l'aéronef par corrélation des messages ou analyse Doppler peuvent être implantés dans (FMS), les récepteurs aéronautiques GPS/GNSS embarqués, ou tout autre calculateur hôte embarqué.

L'invention peut être mise en oeuvre dans une configuration adaptée au type de mission et aux contraintes de coûts. Dans une configuration minimale (GPS à nombre de canaux réduit, calibration au sol, capteur de pression et éventuellement de température), elle sera particulièrement adaptée à des missions d'hélicoptères faiblement équipés ou intervenant en zone non reconnue. La configuration peut être enrichie en fonction de la connaissance de la zone de mission et des capacités de calcul embarquées.

**Revendications**

1. Dispositif d'aide à la navigation d'un aéronef (10) du type comprenant un récepteur (20) de signaux et messages de navigation en provenance d'une constellation de satellites, des moyens (30) de mémorisation de la mesure de l'altitude de l'aéronef et des moyens (40) d'estimation de la variation de ladite altitude, **caractérisé en ce que** le récepteur (20) et les moyens (30) et (40) coopèrent en fournissant une information d'altitude absolue et un intervalle de confiance associé (DPV).

2. Dispositif selon la revendication 1, **caractérisé en ce que** les moyens (30) comprennent les coordonnées (310) dans l'espace de points survolés par l'aéronef et des moyens (320) d'estimation de la distance verticale de l'aéronef au sol au droit de ces points.

3. Dispositif selon l'une des revendications 1 à 2, **caractérisé en ce que** les moyens (40) comprennent des moyens (410) d'estimation de la pression atmosphérique à l'extérieur de l'aéronef.

4. Dispositif selon la revendication 3, **caractérisé en ce que** les moyens (40) comprennent des moyens (420) d'estimation de la température atmosphérique à l'extérieur de l'aéronef.

5. Dispositif selon la revendication 3 ou 4, **caractérisé en ce que** les moyens (40) comprennent en outre des moyens (430) d'entretien de la position verticale de l'aéronef (10) et de l'intervalle de confiance associé (DPV) en fonction des estimations en sortie des moyens (410) ou (410) et (420).

6. Dispositif selon l'une des revendications 1 à 5, **caractérisé en ce que** les moyens (40) comprennent des moyens (210) du récepteur (20) d'entretien de la position de l'aéronef (10) et de l'intervalle de confiance associé (DPV) à partir de navigation par satellites.

7. Dispositif selon la revendication 6, **caractérisé en ce que** les moyens (210) comprennent des moyens (220) de poursuite des codes des satellites de la constellation.

8. Dispositif selon la revendication 6, **caractérisé en ce que** les moyens (210) comprennent des moyens (230) de poursuite de la phase d'au moins un signal en provenance d'un satellite de la constellation.

9. Dispositif selon l'une des revendications 1 à 8, **caractérisé en ce que** les moyens (40) sont programmables pour choisir en cours de la mission et en fonction des conditions de celle-ci, la meilleure estimée de l'altitude sol de l'aéronef (10) parmi les données en sortie du récepteur (20) ou des moyens (30) ou toute combinaison linéaire desdites données.

10. Dispositif selon l'une des revendications 1 à 9, **caractérisé en ce que** les moyens (40) sont programmables pour choisir en cours de mission et en fonction des conditions de celles-ci, la meilleure estimée de l'altitude sol minimale DPV parmi plusieurs solutions.

11. Dispositif selon la revendication 10, **caractérisé en ce que** l'une des solutions estimées pour DPV est la distance de séparation maximale égale à l'écart maximal des altitudes estimées parmi (n + 2) valeurs comprenant la solution en sortie du récepteur (20), n solutions hybrides en sortie des moyens (40) calibrés par les n solutions à (n - 1) satellites en sortie du récepteur 20 et la solution en sortie des moyens (40) calibrée par la solution à n satellites en sortie du récepteur (20), écart augmenté d'un multiple de l'écart type des n solutions en sortie des moyens (40) à n canaux, ledit multiple étant fonction du risque de défaillance accepté par l'utilisateur.

12. Dispositif selon la revendication 10, **caractérisé en ce que** l'une des solutions estimées pour DPV est une distance de protection selon les résidus aux moindres carrés fonction notamment du biais de l'estimation en sortie des moyens (40) au moment de leur calibration par le récepteur (20) augmenté de la dérive de l'incertitude de l'estimation en sortie des moyens (40), ladite dérive augmentant avec le temps et l'éloignement horizontal et vertical de l'aéronef (10) du point de calibration.

13. Dispositif selon la revendication 10, **caractérisé en ce que** l'une des solutions estimées pour DPV est égale à la solution au moment de la calibration augmentée d'une dérive proportionnelle à l'écart type de la mesure, le coefficient de proportionnalité étant issu d'abaques.

14. Procédé d'aide à la navigation d'un aéronef (10) du type comprenant une étape de calibration de la mesure de l'altitude de l'aéronef (10) par un récepteur (20) de signaux et de messages utilisant un dispositif selon l'une des revendications 1 à 13.

15. Système d'aide à la navigation d'un aéronef comprenant un dispositif selon l'une des revendications 1 à 13.

16. Aéronef comprenant un système selon la revendication 15.

17. Utilisation d'un dispositif, d'un procédé, d'un système ou d'un aéronef selon l'une des revendications 1 à 16.

Altitude de consigne

Budget d'erreur de pilotage

Budget d'erreur de navigation

Budget d'erreur sur l'altitude terrain et les obstacles hors terrain

10

$z(t_{cal1})$

$sat_i$

$sat_k$

$sat_j$

$h_{radiosonde}$

$z(t_{cal2})$

$z(t_1)$

$z_{terrain}$

DPVhyb

$t_{cal1}$
Instant de calibration
par GPS

$t_{cal2}$
Instant de calibration
par radiosonde

$t_1$

temps

Fig. 1

**Fig. 2**

Mesures P, T — 410, 420 · 40

Entretien variation d'altitude baro — 430

$Z_{hyb\text{-}baro} = Z_{cal} + \Delta Z$
$DPV_{hyb\text{-}baro}$
Mémorisation $Z_{cal}$

$\Delta Z$, $\sigma_{baro}$

Radiosonde — 320

$h_{radiosonde}$

Base de données terrain

$Z_{ra}, DPV_{ra}$ — 30

info entrée manuellement

OU

$Z_{terrain}$

Base de données terrain — 310

Position 2D, RPH

Meilleure estimée

$Z_{me}, DPV_{me}$

récepteur GPS — 20

$Z_{GPS}$
$DPV_{GPS}$

Test critère calibration
Sélection $Z_{hyb}$

Ordre de calibration

Sortie $Z_{hyb}, DPV_{hyb}$

$Z_{hyb\text{-}RGPS} = Z_{cal} + \Delta Z$
$DPVhyb\text{-}rgps$

Ordre de calibration

Entretien variation d'altitude mode GPS relatif autonome — 40, 210

Méthode Phase — 230

Méthode Code — 220

$3\sigma_{V\_GPSi}$  $z_i$  $3\sigma$  Solution hybride à (n-1) senseurs GPS + baromètre

$DPV_{hyb\_H1}$

Solution pure GPS à n senseurs GPS

$DPV_{hyb\_H0}$  $z_{hyb}$  Solution hybride à n senseurs GPS + baromètre

$z_j$  Solution hybride à (n-1) senseurs GPS + baromètre

$3\sigma_{V\_GPSj}$

## Fig. 3

$z_{GPS}, \sigma_{V\_GPS}$ → Hybridation en précision → $Z_{0\_hyb}, DPV_{H0\_hyb}$

Solution baro (P,T)

$z_{GPS}, \sigma_{V\_GPS}, BV_{H1}$ → Hybridation en intégrité → $Z_{1\_hyb}, DPV_{H1\_hyb}$

Solution GPS pure → $Z_{GPS}, DPV_{H0\_GPS}$

## Fig. 4

dp(t)

Méthode classique

Méthode relative

100 m

t0

t

t

## Fig. 5

distance de disponibilité de l'intégrité verticale (m)

...... VIL GPS
—·—· VIL hyb sans comp. en T°
— — VIL hyb avec comp. en T°

temps (s)

x 10$^4$

## Fig. 6

**Office européen des brevets**

# RAPPORT DE RECHERCHE EUROPEENNE

Numéro de la demande

EP 04 10 1083

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X,P | WO 03/029755 A (THALES ; COATANTIEC JACQUES (FR); GUILLARD PATRICE (FR)) 10 avril 2003 (2003-04-10) * page 4, ligne 3 - ligne 9 * * page 7, ligne 25 - page 8, ligne 17 * * page 20, ligne 3 - ligne 13 * * page 21, ligne 9 - ligne 15 * * figure 1 * | 1,3,6-8, 15 | G01C5/00 G05D1/06 G01S5/14 G01C21/00 |
| A,D | US 6 216 064 B1 (JOHNSON ET AL) 10 avril 2001 (2001-04-10) * abrégé * * colonne 2, ligne 57 - colonne 3, ligne 67 * * colonne 8, ligne 20 - ligne 60 * * colonne 10, ligne 50 - colonne 11, ligne 50 * * colonne 12, ligne 65 - colonne 13, ligne 6 * * colonne 16, ligne 64 - colonne 17, ligne 30 * * figures 11A,11B * | 1-17 | |
| A | US 6 055 477 A (MCBURNEY PAUL ET AL) 25 avril 2000 (2000-04-25) * abrégé * * colonne 2, ligne 22 - ligne 44 * * colonne 7, ligne 39 - colonne 8, ligne 38 * * colonne 10, ligne 23 - ligne 46 * * colonne 18, ligne 8 - ligne 19 * * colonne 19, ligne 19 - ligne 47 * * colonne 20, ligne 29 - ligne 65 * | 1-17 | DOMAINES TECHNIQUES RECHERCHES (Int.Cl.7) G01C G05D G01S G08G |
| A | US 5 265 025 A (HIRATA SEIICHIRO) 23 novembre 1993 (1993-11-23) * le document en entier * | 1-17 | |

-/--

Le présent rapport a été établi pour toutes les revendications

| Lieu de la recherche | Date d'achèvement de la recherche | Examinateur |
|---|---|---|
| La Haye | 8 juillet 2004 | Yosri, S |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**Office européen des brevets**

**RAPPORT DE RECHERCHE EUROPEENNE**

Numéro de la demande

EP 04 10 1083

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | WO 02/31533 A (NEREGAARD FREDRIK ;SAAB AB (SE); PERSSON NIKLAS (SE); SVENSSON MAR) 18 avril 2002 (2002-04-18) * le document en entier * | 1-17 | |

**DOMAINES TECHNIQUES RECHERCHES (Int.Cl.7)**

Le présent rapport a été établi pour toutes les revendications

| Lieu de la recherche | Date d'achèvement de la recherche | Examinateur |
|---|---|---|
| La Haye | 8 juillet 2004 | Yosri, S |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**EP 1 462 761 A1**

ANNEXE AU RAPPORT DE RECHERCHE EUROPEENNE
RELATIF A LA DEMANDE DE BREVET EUROPEEN NO.     EP 04 10 1083

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

08-07-2004

| Document brevet cité au rapport de recherche | | Date de publication | Membre(s) de la famille de brevet(s) | | Date de publication |
|---|---|---|---|---|---|
| WO 03029755 | A | 10-04-2003 | FR | 2830320 A1 | 04-04-2003 |
| | | | CA | 2461595 A1 | 10-04-2003 |
| | | | EP | 1430272 A1 | 23-06-2004 |
| | | | WO | 03029755 A1 | 10-04-2003 |
| US 6216064 | B1 | 10-04-2001 | WO | 9942788 A1 | 26-08-1999 |
| | | | DE | 69916254 D1 | 13-05-2004 |
| | | | EP | 1058816 A1 | 13-12-2000 |
| US 6055477 | A | 25-04-2000 | US | 5646857 A | 08-07-1997 |
| US 5265025 | A | 23-11-1993 | JP | 4070584 A | 05-03-1992 |
| | | | DE | 4123097 A1 | 16-01-1992 |
| | | | KR | 9403418 B1 | 22-04-1994 |
| WO 0231533 | A | 18-04-2002 | SE | 517376 C2 | 04-06-2002 |
| | | | AU | 9250701 A | 22-04-2002 |
| | | | EP | 1325353 A1 | 09-07-2003 |
| | | | SE | 0003713 A | 14-04-2002 |
| | | | WO | 0231533 A1 | 18-04-2002 |